# EUROPÄISCHE PATENTANMELDUNG

(11) **EP 1 076 178 A1**
(43) Veröffentlichungstag der Anmeldung: **14.02.2001**
(21) Anmeldenummer: 00114926.9
(22) Anmeldetag: 18.07.2000
(51) Int. Cl.: F02N 11/08

(54) **Schaltung für den Startvorgang in einem Kraftfahrzeug**

(30) Priorität: 07.08.1999 DE 19937460
(71) Anmelder: Volkswagen Aktiengesellschaft, 38436 Wolfsburg (DE)
(72) Erfinder: Stiller, Armin, 38112 Braunschweig (DE)

(57) **Zusammenfassung**

Eine bekannte Schaltung enthält im allgemeinen ein Relais, dessem Erregerwicklung für den Startvorgang ein Steuerstrom zugeführt wird und dessen Arbeitswicklung den Fahrzeugakku mit dem Startermotor verbindet. Bei Kraftfahrzeugen mit einer Diebstahlsicherung wird der Erregerstrom mit einem elektronischen Schalterelement eingeschaltet, das von einem Mikroprozessor (7) gesteuert wird, dessen Betriebsspannung ebenfalls von dem Fahrzeugakku abgeleitet wird. In der Praxis kann es vorkommen, daß die Akkuspannung während des Startvorgangs soweit abfällt, daß der Mikroprozessor nicht mehr arbeitet und der Startvorgang vorzeitig unterbrochen wird.

Aufgabe ist es, auch in einem derartigen Fall den Startvorgang aufrechtzuerhalten.

In dem Weg des Steuerstroms durch die Erregerwicklung liegt ein aktiv steuerbares selbsthaltendes Schalterelement, vorzugsweise ein Thyristor (5), das am Ende des Startvorgangs über ein Steuerelement, vorzugsweise einen Transistor (6), gelöscht wird.

## Beschreibung

Die Erfindung geht aus von einer Schaltung für den Startvorgang in einem Kraftfahrzeug gemäß dem Oberbegriff des Anspruchs 1.

Ein Kraftfahrzeug enthält im allgemeinen eine Batterie in Form des sogenannten Fahrzeugakkus, vorzugsweise mit einer Nennspannung von 12 Volt, der das gesamte Bordnetz versorgt und beim Startvorgang auch den Strom für den Anlasser- oder Startermotor liefert, der mit dem eigentlichen Fahrzeugmotor in Form einer Verbrennungskraftmaschine (VKM) gekuppelt ist.

Wegen des hohen Startstroms von etwa 200 A erfolgt der Startvorgang mit einem Starterrelais, dessen Arbeitskontakt zwischen dem Fahrzeugakku und dem Startermotor liegt und dessem Erregerwicklung von dem Fahrzeugakku ein Steuerstrom zugeführt wird. Der Steuerstrom kann zum Beispiel von einem Motor-Steuergerät über einen als Schalter arbeitenden Transistor eingeschaltet werden.

Im Rahmen einer Diebstahlsicherung ist es bekannt, die für den Startvorgang benötigten Steuersignale von einem in dem Steuergerät enthaltenen Mikroprozessor zu erzeugen, der nur dann freigegeben wird, wenn, zum Beispiel durch Auswertung eines Schlüsselkodes oder einer Scheckkarte, die Legitimation des Fahrers, das Kraftfahrzeug zu benutzen, erkannt worden ist. Dabei ergibt sich in der Praxis folgende Schwierigkeit:

Wegen des hohen Startstroms von ca 200 A fällt die Spannung am Ausgang des Fahrzeugakkus während des Starterbetriebs u. U. unter die Funktionsgrenze der Elektronik-Komponenten, die auch vom Fahrzeugakku versorgt werden, ab. Es können dann die für den Startvorgang benötigten Signale nicht mehr geliefert werden. Der Startvorgang wird dann vor dem Zünden des Fahrzeugmotors unterbrochen und kann auch nach mehrmaligen Versuchen nicht erfolgen.

Es ist zwar denkbar, mit einem als Stabilisator arbeitenden Gleichspannungswandler, einem sogenannten DC/DC-Konverter, die Ausgangsspannung des Fahrzeugakkus soweit zu stabilisieren, daß diese nicht unter den genannten kritischen Wert von etwa +6 V abfällt. Ebenso ist es möglich, für den Mikroprozessor eine getrennte Batterie oder einen getrennten Akku vorzusehen. Derartige Lösungen erfordern jedoch für einen Massenartikel wie ein Kraftfahrzeug einen zu hohen Kostenaufwand.

Der Erfindung liegt die Aufgabe zugrunde, eine Schaltung für den Startvorgang der beschriebenen Art auf einfache Weise so abzuwandeln, daß auch bei stark verringerter Akkuspannung ein einwandfreier Startvorgang gewährleistet ist, selbst wenn die Akkuspannung unter den Wert absinkt, unterhalb dessen der Mikroprozessor nicht mehr arbeitet.

Diese Aufgabe wird durch die im Anspruch 1 angegebene Erfindung gelöst. Vorteilhafte Weiterbildungen der Erfindung sind in den Unteransprüchen angegeben.

Bei der Erfindung fließt somit der Steuerstrom für das Starterrelais über ein zu Beginn des Startvorgangs leitend gesteuertes, selbsthaltendes Schalterelement, vorzugsweise in Form eines Thyristors. Ein derartiges Schalterelement wie ein Thyristor hat die Eigenart, daß er die Steuerung in den leitenden Zustand gespeichert hat und danach auch ohne Ansteuerung bis zu kleinen Strömen hin leitend bleibt. Diese Eigenart eines Thyristors oder eines ähnlichen Bauteils wird bei der Erfindung somit in vorteilhafter Weise zur Aufrechterhaltung des Starterbetriebs ausgenutzt, selbst wenn durch eine zu niedrige Akkuspannung alle Steuersignale von einem Mikroprozessor ausfallen. Die Erfindung ist besonders vorteilhaft anwendbar bei einem sogenannten Automatikstart, bei dem der Startvorgang durch einmaliges Betätigen eines Knopfes gestartet und dann automatisch beim Zünden des Fahrzeugmotors, also bei Erreichen der Startendedrehzahl, wieder abgeschaltet wird.

Das den Startvorgang beendende Steuerelement wird vorzugsweise durch einen parallel zu dem Schalterelement liegenden, am Ende des Startvorgangs leitend gesteuerten Transistor gebildet.

Bei einer Ausführungsform der Erfindung wird die Zeit, während der das selbsthaltende Schalterelement, vorzugsweise ein Thyristor, leitend ist, zeitlich begrenzt, zum Beispiel auf 5 bis 10 sec. Dadurch wird vermieden, daß ein zu langer Startversuch erfolgt, der den Fahrzeugakku oder andere Bauteile gefährden kann. Es ist auch möglich, die Zeit zwischen dem Beginn des Startvorgangs, also dem Durchschalten des Schalterelements, und dem Ende des Startvorgangs, also der Betätigung des Steuerelementes zu messen und dem Fahrer anzuzeigen oder für Service oder Überwachungszwecke in einem Speicher des Kraftfahrzeugs zu speichern. Eine vorübergehende oder länger dauernde zu hohe Startzeit, zum Beispiel über fünf Sekunden, kann gegebenenfalls auf Fehler in dem Fahrzeugmotor oder der gesamten Anlage hinweisen.

Die Erfindung wird im folgenden anhand der Zeichnung erläutert. Darin zeigen
- Fig. 1: ein Beispiel einer die erfindungsgemäße Lösung enthaltenden Schaltung für den Startvorgang und
- Fig. 2: den Verlauf der von dem Fahrzeugakku abgegebenen Spannung während des Startvorgangs.

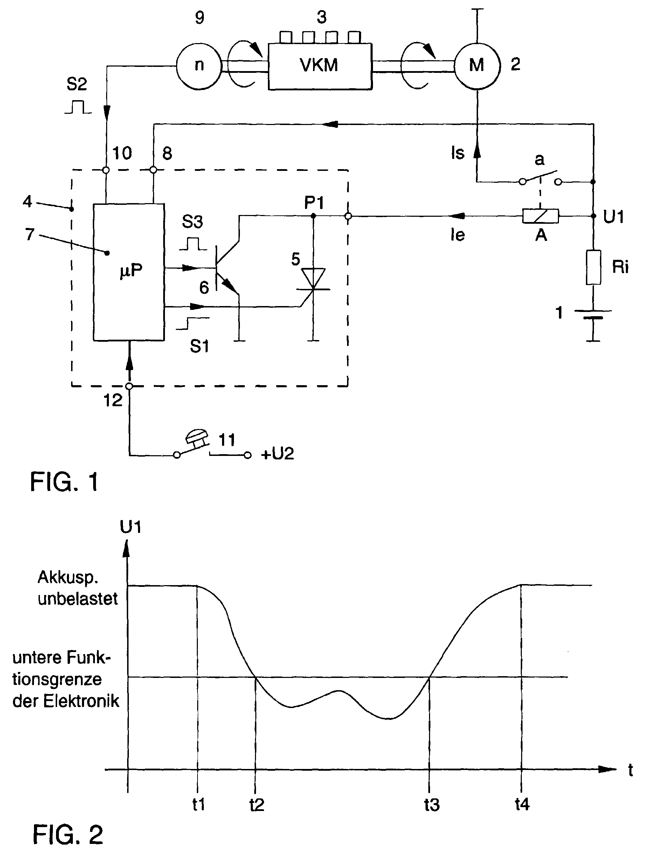

In Fig. 1 ist der Fahrzeugakku 1 mit einer Nennspannung von +12 V und dem Innenwiderstand Ri über die Arbeitswicklung a eines Starterrelais an den Startermotor 2 oder sogenannten Anlasser für den eigentlichen Fahrzeugmotor 3 in Form einer Verbrennungskraftmaschine (VKM) angeschlossen. Außerdem ist die Ausgangsspannung U1 des Fahrzeugakkus 1 über die Erregerwicklung A des Starterrelais und einen in einer Steuerschaltung 4 enthaltenen Thyristor 5 mit Erde verbunden. Parallel zu dem Thyristor 5 liegt die Kollektor/Emitter-Strecke eines Transistor 6. Die Steuerelektroden des Thyristors 5 und des Transistors 6 sind an Ausgänge eines Mikroprozessors 7 angeschlossen, der Steuerimpulse S1 und S3 für die Teile 5, 6 liefert. Die Spannung U1 ist außerdem als Betriebsspannung über den Anschluß 8 an den Mikroprozessor 7 angelegt. Mit dem Fahrzeugmotor 3 ist ein Drehzahlmesser 9 verbunden, der über einen Anschluß 10 des Steuergeräts 4 mit einem weiteren Steuereingang des Mikroprozessors 7 verbunden ist. Ein zum Einleiten des Startvorgangs dienender Starttaster 11 verbindet eine positive Spannung +U2 über einen Anschluß 12 des Steuergeräts 4 mit einem weiteren Steuereingang des Mikroprozessors 7.

Im folgenden wird die Wirkungsweise dieser Schaltung beschrieben. Es sei angenommen, daß der Fahrzeugmotor 3 zunächst nicht läuft und der Arbeitskontakt a geöffnet ist. Zur Einleitung des Startvorgangs wird im Zeitpunkt t1 (Fig. 2) der Starttaster 11 manuell betätigt, so daß die positive Spannung +U2 über den Anschluß 12 des Steuergerätes 4 an den Mikroprozessor 7 gelangt. Daraufhin erzeugt der Mikroprozessor 7 den Impuls S1. Dieser gelangt an das Gate des Thyristors 5 und steuert den Thyristor 5 leitend. Daraufhin fließt von dem Akku 1 über die Erregerwicklung A und den leitenden Thyristor 5 ein Steuerstrom Ie, so daß der Arbeitskontakt a geschlossen wird. Dadurch gelangt die Spannung U1 auch an den Startermotor 2, der nunmehr den Fahrzeugmotor 3 für den Start- oder Anlasserbetrieb antreibt. Wenn der Fahrzeugmotor 3 gezündet hat, das heißt eine bestimmte Startendedrehzahl erreicht ist, erzeugt der Drehzahlmesser 9 einen Impuls S2, der über den Anschluß 10 auf den Mikroprozessor 7 gelangt. Daraufhin erzeugt der Mikroprozessor 7 den kurzen Impuls S3 von einigen Millisekunden, der an die Basis des Transistors 6 gelangt und den Transistor 6 durchschaltet. Dadurch wird der Punkt P1 fast auf Erdpotential gezogen, so daß der Thyristor 5 wieder gelöscht wird. Der Startvorgang ist dann beendet, der Steuerstrom Ie wird null, und der Arbeitskontakt a wird wieder geöffnet.

In Fig. 2 ist angenommen, daß noch während des Startvorgangs, also bevor die Startendedrehzahl erreicht ist, die Spannung U1 aufgrund des hohen Stromes Is und des Innenwiderstandes Ri zwischen den Zeitpunkten t2 und t3 unter den Wert von 6 V abfällt, unterhalb dessen der Mikroprozessor 7 nicht mehr arbeitet. Der Mikroprozessor 7 würde somit von t2-t3 keine Steuerimpulse liefern, so daß ohne besondere Maßnahmen der Weg des Steuerstroms Ie und damit der Startvorgang unterbrochen würden. Obwohl zwischen t2 und t3 die Steuersignale S1 und S3 ausfallen, bleibt der Thyristor 5 aufgrund seiner selbsthaftenden Eigenschaft leitend, so daß trotz des Ausfalls der Steuerimpulse S1 und S3 der Startvorgang fortgesetzt wird. Der Thyristor 5 würde zwar bei einem sehr kleinen Strom, der einer Spannung an P1 von etwa 2 V entspricht, auch gelöscht. Derartig geringe Werte für die Spannung U1 treten jedoch in der Praxis nicht auf. Das bedeutet, daß unter allen denkbaren Umständen, also auch bei der niedrigsten denkbaren Akkuspannung U1, der Starterbetrieb durch einen Ausfall des Mikroprozessors 7 nicht unterbrochen wird.

Im Zeitpunkt t4 von Fig. 2 hat der Fahrzeugmotor 3 gezündet, das heißt die Startendedrehzahl erreicht. Das ist der Zeitpunkt, in dem der Impuls S2 auftritt und den Impuls S3 auslöst, der den Transistor 6 leitend steuert. Dafür ist zwar Voraussetzung, daß der Mikroprozessor 7 wieder arbeitet. Das ist aber in der Praxis der Fall, weil nach der Zündung des Fahrzeugmotors 3, also nach Erreichen der Startendedrehzahl, die Ausgangsspannung U1 des Akkus 1 praktisch wieder auf die Nennspannung angestiegen ist.

Die Erfindung wurde am Beispiel eines Kraftfahrzeugs beschrieben. Sie ist grundsätzlich anwendbar bei Geräten, Maschinen, Anlagen oder dergl., die durch eine Verbrennungskraftmaschine betrieben werden, die von einem Akku gestartet wird. Dazu gehören zum Beispiel auch Baumaschinen, mobile Werkzeugmaschinen, Bodenbearbeitungsgeräte, Rasenmäher und dergl..

### BEZUGSZEICHENLISTE

- 1: Fahrzeugakku
- 2: Startermotor
- 3: Fahrzeugmotor
- 4: Steuerschaltung
- 5: Thyristor
- 6: Transistor
- 7: Mikroprozessor
- 8: Anschluß
- 9: Drehzahlmesser
- 10: Anschluß
- 11: Starttaster
- 12: Anschluß
- U1: Ausgangsspannung
- U2: positive Spannung
- Is: Strom
- Ri: Innenwiderstand
- P1: Punkt
- S1: Impuls
- S2: Impuls
- S3: Impuls
- T1, t2, t3, t4: Zeitpunkt

## Patentansprüche

1. Schaltung für den Startvorgang in einem Kraftfahrzeug mit einem Relais, dessem Erregerwicklung (A) für den Startvorgang ein Steuerstrom (Ie) zugeführt wird und dessen Arbeitskontakt (a) den Fahrzeugakku (1) mit dem Startermotor (2) verbindet, **dadurch gekennzeichnet,** daß im Weg des Steuerstroms (Ie) durch die Erregerwicklung (A) ein aktiv steuerbares, sich selbsthaltendes Schalterelement (5) liegt, das am Ende des Startvorgangs über ein elektronisch steuerbares Steuerelement (6) gelöscht wird.

2. Schaltung nach Anspruch 1, **dadurch gekennzeichnet,** daß das selbsthaltende Schalterelement durch einen Thyristor (5) gebildet ist.

3. Schaltung nach Anspruch 1, **dadurch gekennzeichnet,** daß das selbsthaltende Schalterelement durch ein Triac gebildet ist.

4. Schaltung nach Anspruch 1, **dadurch gekennzeichnet,** daß das Steuerelement durch einen parallel zu dem Schalterelement liegenden, am Ende (t4) des Startvorgangs leitend gesteuerten Transistor (6) gebildet ist.

5. Schaltung nach Anspruch 1, **dadurch gekennzeichnet,** daß der Startvorgang ein automatischer Startvorgang ist, der beim Betätigen eines Druckknopfes (11) eingeleitet und erst bei Erreichen der Startendedrehzahl des Fahrzeugmotors (3) automatisch beendet wird.

6. Schaltung nach Anspruch 1, **dadurch gekennzeichnet,** daß die Steuerung des selbsthaltenden Schalterelements (5) und des Steuerelements (6) von einem Mikroprozessor (7) erfolgt, der im Sinne einer Diebstahlsicherung nur dann freigegeben wird, wenn eine Legitimation des Fahrers erkannt worden ist.

7. Schaltung nach Anspruch 1, **dadurch gekennzeichnet,** daß Mittel vorgesehen sind, die die Dauer des Leitens des selbsthaltenden Schalterelements (5) zeitlich begrenzen.

8. Schaltung nach Anspruch 1, **dadurch gekennzeichnet,** daß Mittel vorgesehen sind, durch die die Startdauer vom Einschalten des Schalterelements (5) bis zum Auslösen des Steuerelements (6) gemessen und angezeigt oder in einen Speicher des Kraftfahrzeugs eingegeben wird.
